# EUROPEAN PATENT SPECIFICATION

(11) **EP 4 231 617 B1**
(45) Date of publication and mention of the grant of the patent: **22.10.2025**
(21) Application number: 22158067.3
(22) Date of filing: 22.02.2022
(51) Int. Cl.: H04L 65/1016, H04L 65/1069, H04L 65/1094, H04M 3/42, H04M 7/00

(54) **METHOD FOR MANAGING AND/OR SIGNALING AT LEAST ONE VOIP CALL AND A COMMUNICATION SYSTEM**
VERFAHREN ZUR VERWALTUNG UND/ODER SIGNALISIERUNG MINDESTENS EINES VOIP-ANRUFS UND KOMMUNIKATIONSSYSTEM
PROCÉDÉ DE GESTION ET/OU DE SIGNALISATION D'AU MOINS UN APPEL VOIP ET SYSTÈME DE COMMUNICATION

(43) Date of publication of application: 23.08.2023
(73) Proprietor: Deutsche Telekom AG, 53113 Bonn (DE)
(72) Inventor: STEPANEK, Nicolas Walter, 64385 Reichelsheim (DE); THIES, Emil, 47166 Duisburg (DE)
(74) Representative: Blumbach · Zinngrebe Patentanwälte PartG mbB

(56) References cited:
- WO-A1-2011/126505
- US-A1- 2007 140 150
- US-A1- 2015 189 073

## Description

The present invention is directed to a method for managing and /or signaling at least one VoIP call using a communication system that preferably comprises an IMS system (IP multimedia subsystem) and a cloud-based customer management system registered on the IMS system as well as a communication system in particular configured to perform the method.

### Background

Known telecommunications systems employ an IP multimedia subsystem (IMS), which for example supports access to different communication services and the establishment of VoIP sessions between user devices. The user devices involved in the VoIP sessions are directly and permanently registered on and connected to the IMS system. US2015/0189073A1 presents a mediation server between an IMS network and an IP-TV network,

US2007/0140150A1 presents a system for providing blended IMA and IP-TV services to customers using VoIP capable terminals.

WO2011/126505A1 presents a push based service to establish an invitation based connection service.

### Summary of the Invention

The invention is defined in the appended claims.

It is an object of the present invention to provide a method and a communication system using an IMS system, wherein the method and the communication system avoid the need for VoIP capable devices associated with a customer to be directly and permanently registered on and connected to the IMS system.

In particular, it is an advantage of the present invention that user devices configured to receive incoming VoIP calls do not need a permanent connection to the communication system and the IMS system, respectively.

In addition, the method and the communication system preferably enable a device, which is not capable to receive or handle a VoIP call, to be used to inform the customer on an incoming VoIP call.

A core aspect of the present invention can be seen in that a communication system comprises an IMS system and a cloud-based customer management system, which is registered on and configured to communicate with the IMS system. Moreover, at least one customer and at least one VoIP capable device and, if available, at least one non-VoIP capable device each associated with the at least one customer are registered on the cloud-based customer management system. Only if an incoming VoIP call destined for the customer is indicated to the cloud-based customer management system the devices associated with the at least one customer are notified thereon and preferably woken up by the cloud-based customer management system. In other words: As long as no incoming VoIP call has been notified by the cloud-based customer management system to the devices associated with the at least one customer, the devices may be held in a stand-by modus.

The technical problem cited above is solved by the steps of claim 1 and further by the features of claim 8. Preferred embodiments are set forth in the dependent claims.

According to a preferred aspect, a method is provided, which uses in particular for managing and/or signaling at least one VoIP call a communication system that preferably comprises an IMS system (IP multimedia subsystem) and a cloud-based customer management system registered on the IMS system, wherein a VoIP capable device is associated with a customer. An address, e.g. a phone number and/or an IP address, is assigned to the VoIP capable device and registered together with an identifier of the customer on the cloud-based customer management system. The identifier can be for example a unique identifier. The method may comprise the steps of:
a) Receiving, at the IMS system, a VoIP session request message from a calling party, wherein the VoIP session request message includes an SDP (session description information) offer and the address of the VoIP capable device;
b) forwarding, by the IMS system, the VoIP session request message to the cloud-based customer management system;
c) Sending or pushing, by the cloud-based customer management system, in response to the VoIP session request message a first notification message to the VoIP capable device, the first notification message including an information of an incoming VoIP call;
d) Notifying, in response to the first notification message, the cloud-based customer management system, that the VoIP capable device is prepared to accept the incoming VoIP call;
e) Forwarding, by the cloud-based customer management system, the VoIP session request message to the VoIP capable device;
f) Sending, by the VoIP capable device, a message including an SDP answer in response to the SDP offer to the cloud-based customer management system;
g) Forwarding the SDP answer, by the cloud-based customer management system, to the IMS system.

The information of an incoming VoIP call may include for example an address of the calling party.

According to a preferred embodiment, at least two VoIP capable devices may be associated with the customer. Further, a different address, e.g. a phone number and/or an IP address, is assigned to each of the VoIP capable devices, wherein the different addresses are registered together with the identifier of the customer on the cloud-based customer management system. The method may comprise the steps of:
a) Receiving, at the IMS system, a VoIP session request message from a calling party, a VoIP session request message, which includes an SDP (session description information) offer and the address of one of the at least two VoIP capable devices or any information identifying the customer;
b) Forwarding, by the IMS system, the VoIP session request message to the cloud-based customer management system;
c) Sending or pushing, by the cloud-based customer management system, in response to the VoIP session request message a first notification message to each of the at least two VoIP capable devices associated with the customer, the first notification message including an information about an incoming VoIP call;
d) Notifying the cloud-based customer management system of the VoIP capable device of the at least two VoIP capable devices, which is prepared to accept the incoming VoIP call;
e) Forwarding, by the cloud-based customer management system, the VoIP session request message only to said VoIP capable device notified at step d) to the cloud-based customer management system;
f) Sending, by said VoIP capable device notified at step d) to the cloud-based customer management system, a message including an SDP answer in response to the SDP offer to the cloud-based customer management system;
g) Forwarding the SDP answer, by the cloud-based customer management system, to the IMS system.

It should be noted, that each first notification message may include a command to be executed by each device associated with the customer to generate for example a wake-up signal and/or a ringing signal and/or any acoustic and/or optic information. In particular, in response to the first notification message received at step c), an optic and/or acoustic signal indicating an incoming VoIP call, may be generated by each of the devices associated with the customer.

Furthermore, it should be mentioned, that each of the VoIP capable devices is preferably configured to support the Session Initiation Protocol (SIP). Preferably, each of the VoIP capable devices can be implemented as a softphone on a computer, as a mobile phone, e.g. a smartphone, as a fixed-line telephone or the like.

Preferably, step g) may further comprise the steps of forwarding the SDP answer from the IMS system to the calling party and establishing a VoIP session between the calling party and said VoIP capable device notified at step d) to the cloud-based customer management system.

According to a preferred embodiment, step d) may comprise the step of sending, only by said VoIP capable device, which is prepared to accept the incoming VoIP call, in response to the first notification message a message to the cloud-based customer management system, indicating the acceptance of the incoming VoIP call.

According to a further aspect, a non-VoIP capable device, e.g. a TV device, may be associated with the customer, wherein
step c) may comprise the step of sending or pushing, by the cloud-based customer management system, a first notification message including an information about an incoming VoIP call also to the non-VoIP capable device associated with the customer, and wherein
step d) may comprise the steps of selecting, by the customer, only the VoIP capable device, preferably of the at least two VoIP capable devices, which is prepared to accept the incoming VoIP call, by using the non-VoIP capable device and sending, by the non-VoIP capable device, an information about the selected VoIP capable device to the cloud-based customer management system.

According to a preferred embodiment, a second notification message may be sent or pushed, by the cloud-based customer management system, to each of the VoIP capable device not notified at step d) to the cloud-based customer management system, wherein each of the second notification message may include for example a command to stop generating the optic and/or acoustic signal.

Preferably, the method may comprise the steps of generating and storing, by the cloud-based customer management system, a call history with respect to the customer.

The call history may for example include information about each incoming and/or outgoing VoIP call, an interruption or termination of an established VoIP session, a VoIP call acceptance or the deny of a VoIP request and/or missed calls.

Preferably, the method may comprise the step of providing at least a portion of the stored call history and retrieving, by the customer and by one of the devices associated with the customer, respectively, at least the portion of the stored call history.

Preferably, the method may comprise the step of storing at least the portion of the call history in form of a webpage retrievable by the customer.

It should be noted that at least one of the VoIP capable devices and/or the non-VoIP capable device associated with the customer can be implemented to retrieve and download from the cloud-based customer management system at least the portion of the call history belonging to the customer. Therefore, a respective software client (APP) can be stored on and executed by the respective VoIP capable devices and/or the non-VoIP capable device.

According to a further preferred aspect, a communication system is provided, which may comprise for example
an IMS system (IP multimedia subsystem) and
a cloud-based customer management system registered on the IMS system and configured to communicate with the IMS system, wherein at least one VoIP capable device is associated with a customer, an address being assigned to the at least one VoIP capable device, wherein the address is registered together with an identifier of the customer on the cloud-based customer management system, wherein the cloud-based customer management system is configured to
   - receive, from the IMS system, a VoIP session request message generated by a calling party, the VoIP session request message including an SDP (session description information) offer and the address of the at least one VoIP capable device,
   - send or push, in response to the VoIP session request message, a notification message to the at least one VoIP capable device associated with the customer, the notification message including an information about an incoming VoIP call,
   - receive a message notifying the cloud-based customer management system of the VoIP capable device, which is prepared to accept the incoming VoIP call,
   - forward the VoIP session request message only said VoIP capable device notified to the cloud-based customer management system,
   - receive a message including an SDP answer from said VoIP capable device notified to the cloud-based customer management system, and to
   - forward the SDP answer to the IMS system for forwarding the SDP answer to a calling party.

According to a preferred embodiment, at least two VoIP capable devices may be associated with the customer, a different address being assigned to each of the VoIP capable devices associated with the customer, wherein the different addresses are registered together with the identifier of the customer on the cloud-based customer management system, wherein
the cloud-based customer management system is configured to
- receive, from the IMS system, a VoIP session request message generated by a calling party, the VoIP session request message including an SDP (session description information) offer and an address of one of the at least two VoIP capable devices,
- send, in response to the VoIP session request message, a notification message to each of the at least two VoIP capable devices associated with the customer, the notification message including an information about an incoming VoIP call,
- receive a message notifying the cloud-based customer management system of the VoIP capable device of the at least two VoIP capable devices, which is prepared to accept the incoming VoIP call,
- forward the VoIP session request message only to said VoIP capable device notified to the cloud-based customer management system,
- receive a message including an SDP answer from said VoIP capable device notified to the cloud-based customer management system, and to
- forward the SDP answer to the the IMS system for forwarding the SDP answer to a calling party.

Preferably, a non-VoIP capable device, e.g. a TV device, may be associated with the customer, wherein the cloud-based customer management system is configured to send a notification message including an information about an incoming VoIP call also to the non-VoIP capable device associated with the customer, and wherein the non-VoIP capable device is configured to generate in response to a customer's action an information about the VoIP capable device, which is prepared to accept the incoming VoIP call and to send this information to the cloud-based customer management system.

Preferably, the cloud-based customer management system may be configured to generate and store a call history with respect to the customer. The call history may include for example information about each incoming and/or outgoing VoIP call, an interruption or termination of an established VoIP session, a VoIP call acceptance or the deny of a VoIP request and/or a missed call.

Preferably, the cloud-based customer management system is configured to provide at least a portion of the stored call history retrievable by the customer and in particular by at least one of the VoIP capable devices or the non-VoIP capable device associated with the customer.

Preferably, at least the portion of the stored call history is stored on the CMS system 60 in form of a webpage retrievable by the customer and, in particular, by at least one of the VoIP capable devices or the non-VoIP capable device associated with the customer.

It should be noted that at least one of the VoIP capable devices and/or the non-VoIP capable device associated with the customer can be implemented to retrieve and download from the cloud-based customer management system at least the portion of the call history belonging to the customer. Therefore, a respective software client (APP) can be stored on and executed by the respective VoIP capable devices and/or the non-VoIP capable device.

### Brief Description of the Drawings

The invention is described in detail below by way of preferred embodiments in connection with the accompanying drawings, wherein
- Figure 1: shows an exemplary message flow diagram for establishing a VoIP communication session using an exemplary communication system including at least one VoIP capable device associated with a customer , and
- Figure 2: shows a further exemplary message flow diagram for establishing a VoIP communication session using an exemplary communication system including the at least one VoIP capable device depicted in figure 1 and in addition a non-VoIP capable device associated with the customer.

### Detailed Description of exemplary Embodiments

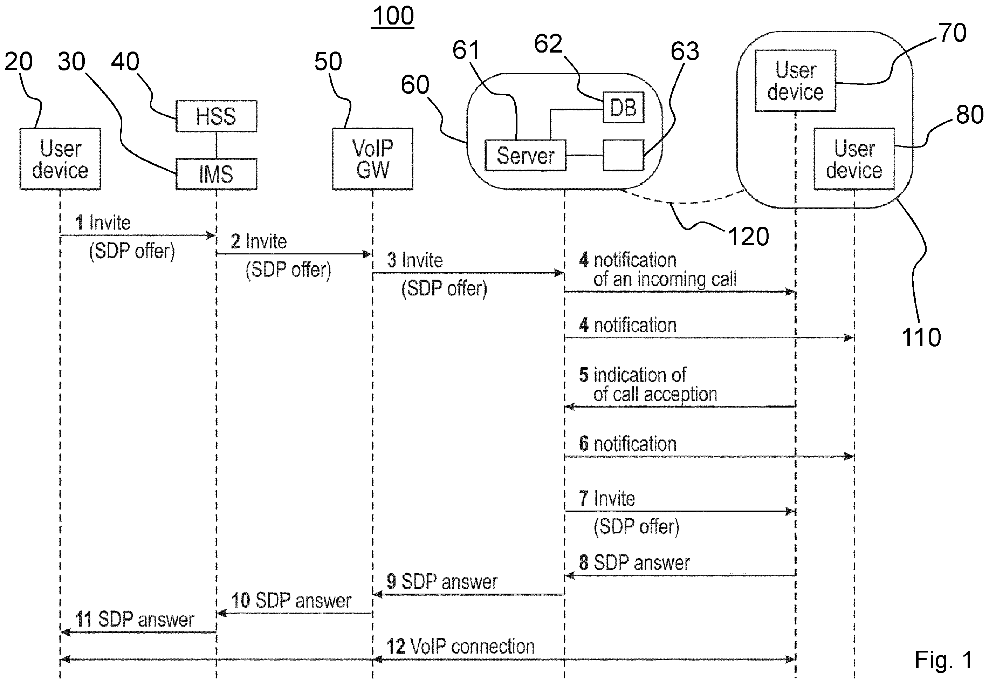

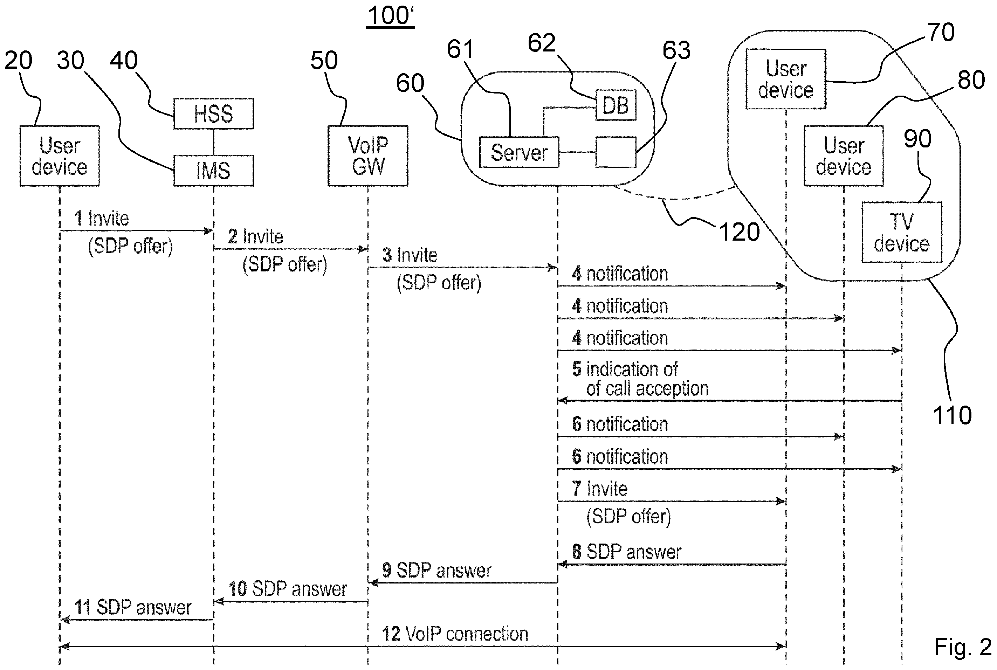

Referring now to figure 1, an exemplary communication system 100 is schematically depicted, which is configured to preferably manage and/or signal VoIP calls and to preferably support the establishment of a real-time VoIP communication sessions between calling parties and called parties. For example, a called party may be a customer and/or at least one device associated with the customer. The customer is symbolized in figure 1 and also in figure 2 by a circle carrying the reference number 110.

In the preferred embodiment shown in figure 1, two VoIP capable devices 70 and 80 are associated to the customer 110. In practice, at least one VoIP capable device is associated with a customer. For example, VoIP capable device 70 can be implemented as a smartphone, whereas VoIP capable device 80 can be implemented as a softphone on a computer. Preferably, each of the VoIP capable devices 70 and 80 is configured to support at least partially the Session Initiation Protocol (SIP). Furthermore, a different address is assigned to each of the VoIP capable devices 70 and 80. The address may be for example an individual phone number or an IP address.

In particular, the exemplary communication system 100 of figure 1 may comprise a cloud-based call management system 60 and an IP multimedia subsystem 30, also called IMS system. The cloud-based customer management system 60, in the following also called CMS system, is registered on the IMS system 30. For example an IP address is assigned to the CMS system 60. In particular, the CMS system 60 can be registered on IMS system 30 by using its IP address. The IP address of the CMS system 60 may be stored for example on a home subscriber server 40, which is accessible by the IMS system 60 or which may be part of the IMS system 30. Preferably, the IMS system 30 is configured to notify, once the CMS system 60 is registered on the IMS system 30, the CMS system 60 of any invite message concerning a VoIP call.

At least customer 110 and the VoIP capable devices 70 and 80, associated with the customer 110, are registered on the cloud-based customer management system 60. In order to register customer 110 and the VoIP capable devices 70 and 80, a predetermined identification or identifier of customer 110, the addresses assigned to the VoIP capable devices 70 and 80 and, preferably, a correlation between the identifier of the customer 110 and the respective addresses can be stored on the CMS system 60. Preferably, these data can be stored in a storage 62 implemented on the CMS system 60. For example, the storage 62 may store the data in form of a database or look-up table. It should be noted, that in practice identifications or identifiers of a plurality of customers and the respective addresses of their VoIP capable devices can managed by the CMS system 60 and stored on the CMS system 60 in the storage 62, respectively. The identifier is preferably a unique identifier of the respective customer.

The cloud-based customer management system 60 may further comprise at least one server device 61 or a network of connected server devices, which is connectable to the storage 62. The CMS system 60 and the server device 61, respectively, may be configured to generate for example a call history with respect to each registered customer. A further storage 63 can be implemented in the CMS system 60, which might be configured to store a call history of each VoIP communication session concerning the respective customer. For example, with respect to each customer registered on the CMS system 60, information about each incoming and/or outgoing VoIP call, the interruption or termination of an established VoIP session, each VoIP call acceptance or the deny of a VoIP request, a missed VoIP call and the like call can be stored as a call history on storage 63. At least some of the information/call history stored with respect to a registered customer can be provided to the respective customer and the registered devices associated with the respective customer, respectively. The information can be provided by and/or stored on the CMS system 60 in form of a webpage retrievable by the respective customer over the Internet, for example.

It should be noted that at least one of the VoIP capable devices 70, 80 associated with the customer 110 can be implemented to retrieve and download from the cloud-based customer management system 60 and the storage 63, respectively, at least the portion of the call history belonging to the customer 110. Therefore, a respective software client (APP) can be stored on and executed by the respective VoIP capable devices 70 and 80.

Preferably, the identifier of the customer 110 and/or the addresses of the VoIP capable devices 70 and 80 associated with the customer 110 may be stored on the IMS system 30 and on the home subscriber server 40, respectively, to inform the IMS system 30 that the customer 110 and the customer's devices 70 and 80 are entitled to get access to a VoIP service provided by the communication system 100.

In a preferred embodiment, the CMS system 60 and the IMS system 30 can communicate via a VoIP gateway 50, which may belong to the IMS system 30. The operation and task of such a VoIP gateway 50 are known to a person skilled in the art. Preferably, the IP address of the VoIP gateway 50 is known to the IMS system 30 and the CMS system 60, whereas the VoIP gateway 50 knows an IP address of the CMS system 60 and an IP address of the IMS system 30 so that messages may be transmitted from the IMS system 30 via the VoIP gateway 50 to the CMS system 60 and vice versa..

Also shown in figure 1 is a calling party 20, which may be implemented as a VoIP-capable and SIP (Session Initiation Protocol) capable telephone 20. SIP and IMS is, for example, described by Gerd Siegmund in the reference book "Technik der Netze 2", ISBN 978-3-7785-4063-3, 6. völlig neu bearbeitete und erweiterte Auflage, 2009 Hüthig Verlag.

It should be noted, that the CMS system 60 and the VoIP capable devices 70, 80 are each preferably configured to communicate via an IP-based data network 120, e.g. the Internet, with each other. In practice, each of the VoIP capable devices 70, 80 is preferably configured to get access to the IP-based data network 120 via an access network. In the preferred embodiment, the VoIP capable device 70 comprises, for example, a wireless communication interface configured to communicate via a radio access network like LTE with the IP-based data network 120. Furthermore, the VoIP capable device 80 may comprise a fixed-line communication interface configured to communicate via fixed-line access network like DSL with the IP-based data network 120. In a similar way, the VoIP gateway 50 and the CMS system 60 may be each configured to communicate via an IP-based data network, e.g. the Internet, with each other.

Now a preferred scenario is described in connection with figure 1 to illustrate the function and operation of the exemplary communication system 100.

It is assumed, that the calling device 20 now generates a VoIP session request message, also called an invite message, using the Session Initiation Protocol SIP. The invite message preferably includes an SDP (Session Description Protocol) offer and, as an address, for example the phone number or IP address of the customer's device 70. The SDP offer may include attributes of the multimedia data stream to be used; in the present case attributes of a VoIP session. Furthermore, the SDP offer preferably contains a list of different codecs supported by the calling device 20. As is known, SDP is used for example to support negotiation of the codec to be used, transport protocols and addresses between a calling party and a called party. At step 1, the VoIP session request message is sent from the calling device 20 to the IMS system 30 using SIP in a known manner.

The VoIP session request message is received and analyzed by the IMS system 30 to determine what to do. Preferably, the IMS system 30 checks, whether the phone number included in the VoIP session request message is for example registered on the home subscriber server 40.In the present exemplary case, the IMS system 30 recognizes that a VoIP session shall be established to customer 110 and the device 70, respectively, and that customer 110 is entitled to get access to the VoIP service of the communication system 100. As a result, the VoIP session request message is preferably forwarded, at step 2, by the IMS system 30 to the VoIP gateway 50 using the IP address of the VoIP gateway 50. At step 3, the VoIP session request message is preferably forwarded by the VoIP gateway 50 to the cloud-based customer management system 60 using the IP address of the CMS system 60 and the server 61, respectively.

The CMS system 60 and the server 61, respectively, is configured for example to analyze the received VoIP session request message in connection with the data stored in storage 62. As a result, the CMS system 60 recognizes that the phone number of device 70 included in the VoIP session request message is linked along with the phone number of the device 80 to customer 110. The CMS system 60 and the server 61, respectively, is further configured, to generate a first notification message including an information of an incoming VoIP call, for example the calling number of the device 20 and/or a user name. In addition, the first notification message may include a command causing devices 70 and 80 to generate a ringing signal and/or optical signal indicating an incoming VoIP.

It should be noted, that although the calling party has used the phone number of the device 70 it is preferably up to the customer 110 to decide which of its devices 70 and 80 shall be used to accept the incoming VoIP call. Therefore, the CMS 60 is configured to send or push, at step 4, a first notification message to each of the at least two VoIP capable devices 70, 80 associated with the customer 110 via the IP-based data network 120 using for example IP addresses assigned to the VoIP capable devices 70 and 80. Preferably, each of the VoIP capable devices 70 and 80 may be further configured to execute the command contained in first notification message, which causes the respective device to generate for example a ringing signal and/or an optic information signaling an incoming VoIP call.

At step 5, the CMS system 60 is notified preferably by the customer 110 of the VoIP capable device of the two VoIP capable devices 70 and 80, which is prepared to accept the incoming VoIP call, i.e. which shall terminate the requested VoIP communication session. In the present case, device 70 shall be used with respect to the incoming VoIP call. For example, the customer 110 may cause the device 70, for example by entering a respective command on the device 70, to send, by using the IP address of the CMS system 60, an identification message to the CMS system 60 indicating that device 70 is prepared to accept the incoming VoIP call.

The CMS system 60 and the server 61, respectively, is preferably configured to send or push, at step 6, in response to the identification message received from the VoIP capable device 70 a second notification message to the VoIP capable device 80 not notified to the CMS system 60, wherein the second notification message includes a command to cause the VoIP device 80 to stop generating the optic and/or ringing signal.

Furthermore, the CMS system 60 and the server 61, respectively, is preferably configured to forward, at step 7, in response to the identification message received from the VoIP capable device 70 the VoIP session request message only to the VoIP device 70 notified to the CMS system 60.

The VoIP device 70 is preferably configured to
i) generate in response to the SDP offer included in the VoIP session request message received from the CMS system 60 a message including an SDP answer and
ii) to send this message, at step 8 to the CMS system 60 and Server 61, respectively.

The CMS system 60 and the server 61, respectively, is configured to forward the message including the SDP answer, if implemented, to the VoIP gateway 50 at step 9, wherein the IMS system 30, is configured to forward the received SDP answer to the calling device 20 at step 11. It is to be noted, that the message including the SDP answer may also include the address of the calling device 20.

Now, the requested real- time VoIP communication session can be established between the calling device 20 and the customer's device 70 at step 12 in order to exchange VoIP signals.

It should be noted, that if only one VoIP capable device, e.g. device 70, is associated with the customer 110, the operation and function of the communication system 100 is very similar to that illustrated above in connection with two VoIP capable devices 70 and 80. The differences are that a first notification message is pushed at step 4 only to the device 70 and step 6 is omitted.

Furthermore, it should be noted that the CMS system 60 can be preferably configured to collect meta data of the calling party 20, which are stored for example on the IMS system 30, and to push them to the VoIP capable devices 70 and/or 80 associated with the customer 110 acting as a called party. The meta data may include information about the name of the calling user, the phone number and/or an IP address of the device 20. In addition, the current state of each established real-time VoIP sessions, .e.g. the VoIP session established at step 12, the duration of an ongoing VoIP session, termination or holding of an VoIP session may be protocolled by the CMS system 60 and the respective information may be stored ion the storage 63 for further use. In particular, the CMS system 60 may inform the VoIP devices 70 and 80 associated with customer 110 on that VoIP capable device, which is currently the called endpoint of the VoIP session established at step 12.

Now, a further scenario is described in connection with figure 2 to illustrate the operation and function of a communication system 100'. The communication system 100' differs from the communication system 100 as shown in figure 1 in that a non-VoIP capable device 90 is now associated along with the VoIP capable devices 70 and 80 with the customer 110. The non-VoIP capable device 90 may be a TV device or a smart speaker. It is assumed, that the non-VoIP capable device 90 is a TV device, which does not support the SIP protocol. However, an IP address can be assigned to the TV device 90. Therefore, the customer 110 and the devices 70 to 90 associated with the customer 110 are now registered on the CMS system 60. For example, an identifier of the customer 110 is stored together with the respective addresses of the VoIP capable devices 70, 80 and the non-VoIP capable device 90 in the storage 62. It should be noted that the non-VoIP capable device 90 associated with the customer 110 can be implemented to retrieve and download from the cloud-based customer management system 60 at least the portion of the call history belonging to the customer 110. Therefore, a respective software client (APP) can be stored on and executed by the non-VoIP capable device.

For the sake of simplicity it is assumed, that the calling device 20 now generates similar to the first scenario illustrated above a VoIP session request message, also called an invite message, using the Session Initiation Protocol SIP. The invite message preferably includes an SDP (Session Description Protocol) offer and, as an address, for example the phone number and/or IP address of the VoIP capable device 70 associated with the customer 110, which acts as a called party. As a result, steps 1 to 3 as depicted in figure 2 are preferably identical to steps 1 to 3 of figure 1. Therefore, it is now assumed that the CMS system 60 and the server 61, respectively has received the VoIP session request message from the VoIP gateway 50 as illustrated above in connection with figure 1.

The CMS system 60 and the server 61, respectively, is configured to analyze the received VoIP session request message in connection with the data stored in storage 62. As a result, the CMS system 60 recognizes that the phone number of device 70 included in the VoIP session request message is linked along with the registered addresses of the devices 80 and 90 to customer 110. The CMS system 60 and the server 61, respectively, is further configured, to generate a first notification message for each of the devices 70, 80, and 90. Each first notification message may include for example an information of an incoming VoIP call, for example the calling number of the device 20 and/or a user name. In addition, each first notification message may include a command causing devices 70, 80 and 90 to generate a ringing signal and/or an optical signal indicating an incoming VoIP. Preferably, the first notification message destined for the TV device 90 may include a command, which causes the TV device 90, if the command is executed by the TV device 90, to depict for example symbols of the VoIP capable devices 70 and 80 on its display. It is assumed, that the TV device 90 comprises a touch screen.,

It should be noted, that although the calling party has used the phone number of the device 70 it is preferably up to the customer 110 to decide which of its devices 70 and 80 shall accept or terminate the incoming VoIP call. Therefore, the CMS 60 is configured to send or push, at step 4, the respective first notification message to each of the two VoIP capable devices 70, 80 as well as to the TV device 90 via the IP-based data network 120 using for example the IP addresses assigned to the VoIP capable devices 70 and 80 and to the TV device 90. Preferably, each of the VoIP capable devices 70 and 80 and the TV device 90 may be further configured to execute the command contained in the respective first notification message, which causes for example the respective devices 70, 80 and 90 to generate for example a ringing signal and/or an optic information signaling an incoming VoIP call. In addition, as mentioned above, the TV-device 90 may be configured to depict for example symbols of the VoIP capable devices 70 and 80 on its touch screen.

At step 5, the CMS system 60 is notified preferably by the customer 110 of the VoIP capable device of the two VoIP capable devices 70 and 80, which is prepared to accept the incoming VoIP call, i.e. which shall accept the requested VoIP communication session. In the present case, device 70 shall accept the incoming VoIP call. For example, the customer 110 may touch with a finger the symbol of the VoIP capable device 70 on the touch screen of the TV device 90, thereby causing the TV-device 90 to send, by using the IP address of the CMS system 60, an identification message to the CMS system 60 indicating that a different device, namely device 70 is prepared to accept, i.e. to receive the incoming VoIP call.

The CMS system 60 and the server 61, respectively, is preferably configured to send or push, at step 6, in response to the identification message received from the TV device 90 a second notification message to both the VoIP capable device 80 and to the TV device 90 which have been not notified to the CMS system 60, wherein the second notification message received by the device 80 may include a command to cause the VoIP capable device 80 to stop generating the optic and/or ringing signal, whereas the second notification message received by the TV device 90 may include a command to cause the TV device 80 to stop generating the optic and/or ringing signal and/or to depict an information on the touch screen indicating that the VoIP device 70 has been successfully selected to accept the incoming VoIP call.

Furthermore, the CMS system 60 and the server 61, respectively, is preferably configured to forward, at step 7, in response to the identification message received from the TV device 90 the VoIP session request message only to the selected VoIP device 70 notified to the CMS system 60.

The VoIP device 70 is preferably configured, to
i) generate in response to the SDP offer included in the VoIP session request message received from the CMS system 60 a message including an SDP answer and
ii) to send this message, at step 8 to the CMS system 60 and Server 61, respectively.

The CMS system 60 and the server 61, respectively, is configured to forward the message including the SDP answer, if implemented, to the VoIP gateway 50 at step 9, wherein the IMS system 30, is configured to forward the received SDP answer to the calling device 20 at step 11. It is to be noted, that the message including the SDP answer may also include the address of the calling device 20.

Now, the requested real- time VoIP communication session can be established between the calling device 20 and the customer's device 70 at step 12 in order to exchange VoIP signals.

## Claims

1. A method for managing and/or signaling at least one VoIP call using a communication system (100; 100') that comprises an IP multimedia subsystem, IMS system (30) and a cloud-based customer management system (60) registered on the IMS system (30), wherein a VoIP capable device (70) is associated with a customer (110), wherein an address is assigned to the VoIP capable device (70) and registered together with an identifier of the customer (110) on the cloud-based customer management system (60), and wherein the VoIP capable device (70) is not directly connected to the IMS system (30), the method comprising the steps of:
a) Receiving, at the IMS system (30), a VoIP session request message from a calling party (20), wherein the VoIP session request message includes a session description information, SDP offer and the address of the VoIP capable device (70);
b) forwarding, by the IMS system (30), the VoIP session request message to the cloud-based customer management system (60);
c) Sending, by the cloud-based customer management system (60), in response to the VoIP session request message a first notification message to the VoIP capable device (70), the first notification message including an information of an incoming VoIP call;
d) Notifying, in response to the first notification message, the cloud-based customer management system (60), that the VoIP capable device (70) is prepared to accept the incoming VoIP call;
e) Forwarding, by the cloud-based customer management system (60), the VoIP session request message to the VoIP capable device (70);
f) Sending, by the VoIP capable device (70), a message including an SDP answer in response to the SDP offer to the cloud-based customer management system (60);
g) Forwarding the SDP answer, by the cloud-based customer management system (60), to the IMS system (30).

2. The method according to claim 1, wherein at least two VoIP capable devices (70, 80) are associated with the customer (110), a different address being assigned to each of the VoIP capable devices (70, 80), wherein the different addresses are registered together with the identifier of the customer (110) on the cloud-based customer management system (60), the method comprising the steps of:
a) Receiving, at the IMS system (30), a VoIP session request message from a calling party (20), a VoIP session request message including an SDP (session description information) offer and the address of one of the at least two VoIP capable devices (70, 80);
b) forwarding, by the IMS system (30), the VoIP session request message to the cloud-based customer management system (60);
c) Sending, by the cloud-based customer management system (60), in response to the VoIP session request message a first notification message to each of the at least two VoIP capable devices (70, 80) associated with the customer (110), the first notification message including an information about an incoming VoIP call;
d) Notifying the cloud-based customer management system (60) of the VoIP capable device (70) of the at least two VoIP capable devices (70, 80), which is prepared to accept the incoming VoIP call;
e) Forwarding, by the cloud-based customer management system (60), the VoIP session request message only to said VoIP capable device (70) notified at step d) to the cloud-based customer management system (60);
f) Sending, by said VoIP capable device (70) notified at step d) to the cloud-based customer management system (60), a message including an SDP answer in response to the SDP offer to the cloud-based customer management system (60);
g) Forwarding the SDP answer, by the cloud-based customer management system (60), to the IMS system (30).

3. The method according to claim 1 or 2, wherein
step g) comprises the steps of forwarding the SDP answer from the IMS system (30) to the calling party (20) and establishing a VoIP session between the calling party (20) and said VoIP capable device (70) notified at step d) to the cloud-based customer management system (60).

4. The method according to any one of the preceding claims,
wherein step d) comprises the step of sending, only by said VoIP capable device (70), which is prepared to accept the incoming VoIP call, in response to the first notification message a message to the cloud-based customer management system (60), indicating the acceptance of the incoming VoIP call.

5. The method according to any one of the preceding claims, wherein
a non-VoIP capable device (90) is associated with the customer (110), wherein step c) comprises the step of sending, by the cloud-based customer management system (60), a first notification message including an information about an incoming VoIP call also to the non-VoIP capable device (90) associated with the customer (110), and wherein
step d) comprises the steps of selecting, by the customer (110), only the VoIP capable device (70) of the at least two VoIP capable devices (70, 80), which is prepared to accept the incoming VoIP call, by using the non-VoIP capable device (90) and sending, by the non-VoIP capable device (90), an information about the selected VoIP capable device (70) to the cloud-based customer management system (90).

6. The method according to any one of the preceding claims,
wherein, in response to the first notification message received at step c), an optic and/or acoustic signal indicating an incoming VoIP call is generated by each of the devices (70, 80, 90) associated with the customer (110).

7. The method according to claim 6 in connection with claim 2,
wherein a second notification message is sent, by the cloud-based customer management system (60), to each of the VoIP capable device (80) not notified at step d) to the cloud-based customer management system, wherein each of the second notification message includes a command to stop generating the optic and/or acoustic signal.

8. A communication system (100, 110', comprising
an IP multimedia subsystem, IMS system (30) and
a cloud-based customer management system (60) registered on the IMS system (30) and configured to communicate with the IMS system (30), wherein at least one VoIP capable device (70) is associated with a customer (110), an address being assigned to the at least one VoIP capable device (70), wherein the address is registered together with an identifier of the customer on the cloud-based customer management system (60), wherein the VoIP capable device (70) is not directly connected to the IMS system (30), and wherein
the cloud-based customer management system (60) is configured to
- receive, from the IMS system (30), a VoIP session request message generated by a calling party (20), the VoIP session request message including a session description information, SDP offer and the address of the at least one VoIP capable device (70),
- send, in response to the VoIP session request message, a notification message to the at least one VoIP capable device (70) associated with the customer (110), the notification message including an information about an incoming VoIP call,
- receive a message notifying the cloud-based customer management system (60) of the VoIP capable device (70), which is prepared to accept the incoming VoIP call,
- forward the VoIP session request message only to said VoIP capable device (70) notified to the cloud-based customer management system (60),
- receive a message including an SDP answer from said VoIP capable device (70) notified to the cloud-based customer management system, and to
- forward the SDP answer to the IMS system (30) for forwarding the SDP answer to a calling party (20).

9. The communication system according to claim 8, wherein
at least two VoIP capable devices (70, 80) are associated with the customer (110), a different address being assigned to each of the at least two VoIP capable devices (70, 80) associated with the customer (110), wherein the different addresses are registered together with the identifier of the customer (110) on the cloud-based customer management system (60), wherein
the cloud-based customer management system (60) is configured to
- receive, from the IMS system (30), a VoIP session request message generated by a calling party (20), the VoIP session request message including an SDP (session description information) offer and an address of one (70) of the at least two VoIP capable devices (70, 80),
- send, in response to the VoIP session request message, a notification message to each of the at least two VoIP capable devices (70, 80) associated with the customer (110), the notification message including an information about an incoming VoIP call,
- receive a message notifying the cloud-based customer management system (60) of the VoIP capable device (70) of the at least two VoIP capable devices (70, 80), which is prepared to accept the incoming VoIP call,
- forward the VoIP session request message only to said VoIP capable device (70) notified to the cloud-based customer management system (60),
- receive a message including an SDP answer from said VoIP capable device (70) notified to the cloud-based customer management system (60), and to
- forward the SDP answer to the IMS system (30) for forwarding the SDP answer to a calling party (20).

10. The communication system according to claim 8 or 9, wherein
a non-VoIP capable device (90) is associated with the customer (110), wherein the cloud-based customer management system (60) is configured to send a notification message including an information about an incoming VoIP call also to the non-VoIP capable device (90) associated with the customer (110), and wherein
the non-VoIP capable device (90) is configured to generate in response to a customer's action an information about the VoIP capable device (70), which is prepared to accept the incoming VoIP call and to send this information to the cloud-based customer management system (60).

11. The communication system according to any one of the claims 8 to 10, wherein the cloud-based customer management system (60) is configured to generate and store a call history with respect to the customer.

12. The communication system according to claim 11, wherein
the call history includes information about each incoming and/or outgoing VoIP call, an interruption or termination of an established VoIP session, a VoIP call acceptance or the deny of a VoIP request.

13. The communication system according to claim 11 or 12, wherein
the cloud-based customer management system (60) is configured to provide at least a portion of the stored call history retrievable by the customer.

14. The communication system according to claim 13, wherein
at least the portion of the stored call history is stored on the cloud-based customer management system (60) in form of a webpage retrievable by the customer.

## Patentansprüche

1. Verfahren zum Verwalten und/oder Signalisieren wenigstens eines VoIP-Anrufs unter Verwendung eines Kommunikationssystems (100; 100'), das ein IP Multimedia Subsystem, IMS-System (30) und ein cloudbasiertes Kundenmanagementsystem (60), das auf dem IMS-System (30) registriert ist, umfasst, wobei ein VoIP-fähiges Gerät (70) einem Kunden (110) zugeordnet ist, wobei dem VoIP-fähigen Gerät (70) eine Adresse zugewiesen und zusammen mit einer Kennung des Kunden (110) im cloudbasierten Kundenmanagementsystem (60) registriert wird , und wobei das VoIP-fähige Gerät (70) nicht direkt mit dem IMS-System (30) verbunden ist, wobei das Verfahren die folgenden Schritte umfasst:
a) Empfangen einer VoIP-Sitzungsanforderungsnachricht von einem Anrufer (20) im IMS-System (30), wobei die VoIP-Sitzungsanforderungsnachricht ein Sitzungsbeschreibungsinformation, SDP-Angebot und die Adresse des VoIP-fähigen Geräts (70) enthält;
b) Weiterleiten der VoIP-Sitzungsanforderungsnachricht durch das IMS-System (30) an das cloudbasierte Kundenmanagementsystem (60);
c) Senden einer ersten Benachrichtigungsnachricht durch das cloudbasierte Kundenmanagementsystem (60) in Antwort auf die VoIP-Sitzungsanforderungsnachricht an das VoIP-fähige Gerät (70), wobei die erste Benachrichtigungsnachricht eine Information über einen eingehenden VoIP-Anruf enthält;
d) Mitteilen dem cloudbasierten Kundenmanagementsystem (60) in Antwort auf die erste Benachrichtigungsnachricht, dass das VoIP-fähige Gerät (70) bereit ist, den eingehenden VoIP-Anruf anzunehmen;
e) Weiterleiten der VoIP-Sitzungsanforderungsnachricht durch das cloudbasierte Kundenmanagementsystem (60) an das VoIP-fähige Gerät (70);
f) Senden einer Nachricht mit einer SDP-Antwort in Antwort auf das SDP-Angebot durch das VoIP-fähige Gerät (70) an das cloudbasierte Kundenmanagementsystem (60);
g) Weiterleiten der SDP-Antwort durch das cloudbasierte Kundenmanagementsystem (60) an das IMS-System (30).

2. Verfahren nach Anspruch 1, wobei dem Kunden (110) wenigstens zwei VoIP-fähige Geräte (70, 80) zugeordnet sind, wobei jedem der VoIP-fähigen Geräte (70, 80) eine andere Adresse zugewiesen ist, wobei die verschiedenen Adressen zusammen mit der Kennung des Kunden (110) im cloudbasierten Kundenmanagementsystem (60) registriert sind, wobei das Verfahren die folgenden Schritte umfasst:
a) Empfangen einer VoIP-Sitzungsanforderungsnachricht von einem Anrufer (20) im IMS-System (30), wobei die VoIP-Sitzungsanforderungsnachricht ein SDP (Sitzungsbeschreibungsinformation)-Angebot und die Adresse eines der wenigstens zwei VoIP-fähigen Geräte (70, 80) enthält;
b) Weiterleiten der VoIP-Sitzungsanforderungsnachricht durch das IMS-System (30) an das cloudbasierte Kundenmanagementsystem (60);
c) Senden einer ersten Benachrichtigungsnachricht durch das cloudbasierte Kundenmanagementsystem (60) in Antwort auf die VoIP-Sitzungsanforderungsnachricht an jedes der wenigstens zwei VoIP-fähigen Geräte (70, 80), die dem Kunden (110) zugeordnet sind, wobei die erste Benachrichtigungsnachricht eine Information über einen eingehenden VoIP-Anruf enthält;
d) Mitteilen dem cloudbasierten Kundenmanagementsystem (60) das VoIP-fähige Gerät (70) der wenigstens zwei VoIP-fähigen Geräte (70, 80), das bereit ist, den eingehenden VoIP-Anruf anzunehmen;
e) Weiterleiten der VoIP-Sitzungsanforderungsnachricht durch das cloudbasierte Kundenmanagementsystem (60) nur an das in Schritt d) dem cloudbasierten Kundenmanagementsystem (60) mitgeteilte VoIP-fähige Gerät (70);
f) Senden einer Nachricht mit einer SDP-Antwort in Antwort auf das SDP-Angebot durch das dem cloudbasierten Kundenmanagementsystem (60) in Schritt d) mitgeteilte VoIP-fähige Gerät (70) an das cloudbasierte Kundenmanagementsystem (60);
g) Weiterleiten der SDP-Antwort durch das cloudbasierte Kundenmanagementsystem (60) an das IMS-System (30).

3. Verfahren nach Anspruch 1 oder 2, wobei Schritt g) die Schritte umfasst, die SDP-Antwort vom IMS-System (30) an den Anrufer (20) weiterzuleiten und eine VoIP-Sitzung zwischen dem Anrufer (20) und dem in Schritt d) dem cloudbasierten Kundenmanagementsystem (60) mitgeteilten VoIP-fähigen Gerät (70) aufzubauen.

4. Verfahren nach einem der vorstehenden Ansprüche, wobei Schritt d) den Schritt umfasst, dass nur das VoIP-fähige Gerät (70), das bereit ist, den eingehenden VoIP-Anruf anzunehmen, in Antwort auf die erste Benachrichtigungsnachricht eine Nachricht an das cloudbasierte Kundenmanagementsystem (60) sendet, welche die Annahme des eingehenden VoIP-Anrufs anzeigt.

5. Verfahren nach einem der vorstehenden Ansprüche, wobei dem Kunden (110) ein nicht VoIP-fähiges Gerät (90) zugeordnet ist, wobei Schritt c) den Schritt umfasst, dass das cloudbasierte Kundenmanagementsystem (60) eine erste Benachrichtigungsnachricht, die eine Information über einen eingehenden VoIP-Anruf enthält, auch an das mit dem Kunden (110) verbundene nicht VoIP-fähige Gerät (90) sendet, und wobei
Schritt d) die Schritte umfasst, dass der Kunde (110) unter Verwendung des nicht VoIP-fähigen Geräts (90) nur das VoIP-fähige Gerät (70) der wenigstens zwei VoIP-fähigen Geräte (70, 80) auswählt, das bereit ist, den eingehenden VoIP-Anruf anzunehmen, und das nicht VoIP-fähige Gerät (90) eine Information über das ausgewählte VoIP-fähige Gerät (70) an das cloudbasierte Kundenverwaltungssystem (90) sendet.

6. Verfahren nach einem der vorstehenden Ansprüche, wobei in Antwort auf die in Schritt c) empfangene erste Benachrichtigungsnachricht von jedem der mit dem Kunden (110) verbundenen Geräte (70, 80, 90) ein optisches und/oder akustisches Signal erzeugt wird, das einen eingehenden VoIP-Anruf anzeigt.

7. Verfahren nach Anspruch 6 in Verbindung mit Anspruch 2, wobei eine zweite Benachrichtigungsnachricht vom cloudbasierten Kundenmanagementsystem (60) an jedes der VoIP-fähigen Geräte (80), das in Schritt d) nicht an das cloudbasierte Kundenmanagementsystem mitgeteilt wurde, gesendet wird, wobei jede der zweiten Benachrichtigungsnachrichten einen Befehl zum Beenden der Erzeugung des optischen und/oder akustischen Signals enthält.

8. Kommunikationssystem (100, 110'), umfassend
ein IP Multimedia Subsystem, IMS-System (30) und
ein cloudbasiertes Kundenmanagementsystem (60), das im IMS-System (30) registriert und für die Kommunikation mit dem IMS-System (30) konfiguriert ist, wobei wenigstens ein VoIP-fähiges Gerät (70) einem Kunden (110) zugeordnet ist, wobei dem wenigstens einen VoIP-fähigen Gerät (70) eine Adresse zugewiesen ist, wobei die Adresse zusammen mit einer Kennung des Kunden im cloudbasierten Kundenmanagementsystem (60) registriert ist, wobei das VoIP-fähige Gerät (70) nicht direkt mit dem IMS-System (30) verbunden ist, und wobei
das cloudbasierte Kundenmanagementsystem (60) dazu ausgebildet ist,
- vom IMS-System (30) eine von einem Anrufer (20) generierte VoIP-Sitzungsanforderungsnachricht zu empfangen, wobei die VoIP-Sitzungsanforderungsnachricht ein Sitzungsbeschreibungsinformation, SDP-Angebot und die Adresse des wenigstens einen VoIP-fähigen Geräts (70) enthält,
- in Antwort auf die VoIP-Sitzungsanforderungsnachricht eine Benachrichtigungsnachricht an das wenigstens eine dem Kunden (110) zugeordnete VoIP-fähige Gerät (70) zu senden, wobei die Benachrichtigungsnachricht eine Information über einen eingehenden VoIP-Anruf enthält,
- eine Nachricht zu empfangen, die dem cloudbasierten Kundenmanagementsystem (60) das VoIP-fähige Gerät (70) mitteilt, das bereit ist, den eingehenden VoIP-Anruf anzunehmen,
- die VoIP-Sitzungsanforderungsnachricht nur an das VoIP-fähige Gerät (70) weiterzuleiten, das dem cloudbasierten Kundenmanagementsystem (60) mitgeteilt wurde,
- eine Nachricht mit einer SDP-Antwort von dem VoIP-fähigen Gerät (70), das dem cloudbasierten Kundenmanagementsystem mitgeteilt wurde, zu empfangen, und
- die SDP-Antwort an das IMS-System (30) zum Weiterleiten der SDP-Antwort an einen Anrufer (20) weiterzuleiten.

9. Kommunikationssystem nach Anspruch 8, wobei dem Kunden (110) wenigstens zwei VoIP-fähige Geräte (70, 80) zugeordnet sind, wobei jedem der wenigstens zwei dem Kunden (110) zugeordneten VoIP-fähigen Geräten (70, 80) eine andere Adresse zugewiesen ist, wobei die verschiedenen Adressen zusammen mit der Kennung des Kunden (110) im cloudbasierten Kundenverwaltungssystem (60) registriert sind, wobei das cloudbasierte Kundenverwaltungssystem (60) dazu ausgebildet ist,
- vom IMS-System (30) eine von einem Anrufer (20) generierte VoIP-Sitzungsanforderungsnachricht zu empfangen, wobei die VoIP-Sitzungsanforderungsnachricht ein SDP (Sitzungsbeschreibungsinformation)-Angebot und eine Adresse eines (70) der wenigstens zwei VoIP-fähigen Geräte (70, 80) enthält,
- in Antwort auf die VoIP-Sitzungsanforderungsnachricht eine Benachrichtigungsnachricht an jedes der wenigstens zwei dem Kunden (110) zugeordneten VoIP-fähigen Geräte (70, 80) zu senden, wobei die Benachrichtigungsnachricht eine Information über einen eingehenden VoIP-Anruf enthält,
- eine Nachricht zu empfangen, die dem cloudbasierten Kundenmanagementsystem (60) das VoIP-fähige Gerät (70) der wenigstens zwei VoIP-fähigen Geräte (70, 80) mitteilt, das bereit ist, den eingehenden VoIP-Anruf anzunehmen,
- die VoIP-Sitzungsanforderungsnachricht nur an das VoIP-fähige Gerät (70) weiterzuleiten, das dem cloudbasierten Kundenmanagementsystem (60) mitgeteilt wurde,
- eine Nachricht mit einer SDP-Antwort von dem VoIP-fähigen Gerät (70), das dem cloudbasierten Kundenmanagementsystem (60) mitgeteilt wurde, zu empfangen, und
- die SDP-Antwort an das IMS-System (30) zum Weiterleiten der SDP-Antwort an einen Anrufer (20) weiterzuleiten.

10. Kommunikationssystem nach Anspruch 8 oder 9, wobei
dem Kunden (110) ein nicht VoIP-fähiges Gerät (90) zugeordnet ist, wobei das cloudbasierte Kundenmanagementsystem (60) dazu ausgebildet ist, eine Benachrichtigungsnachricht mit einer Information über einen eingehenden VoIP-Anruf auch an das dem Kunden (110) zugeordnete nicht VoIP-fähige Gerät (90) zu senden, und wobei
das nicht VoIP-fähige Gerät (90) dazu ausgebildet ist,
in Antwort auf eine Aktion des Kunden eine Information über das VoIP-fähige Gerät (70) zu erzeugen, das bereit ist, den eingehenden VoIP-Anruf anzunehmen, und diese Information an das cloudbasierte Kundenmanagementsystem (60) zu senden.

11. Kommunikationssystem nach einem der Ansprüche 8 bis 10, wobei
das cloudbasierte Kundenmanagementsystem (60) dazu ausgebildet ist, eine Anrufhistorie bezüglich des Kunden zu erzeugen und zu speichern.

12. Kommunikationssystem nach Anspruch 11, wobei
die Anrufhistorie Informationen über jeden eingehenden und/oder ausgehenden VoIP-Anruf, eine Unterbrechung oder Beendigung einer aufgebauten VoIP-Sitzung, eine VoIP-Anrufannahme oder die Ablehnung einer VoIP-Anfrage enthält.

13. Kommunikationssystem nach Anspruch 11 oder 12, wobei
das cloudbasierte Kundenmanagementsystem (60) dazu ausgebildet ist, zumindest einen Teil der gespeicherten Anrufhistorie durch den Kunden abrufbar bereitzustellen.

14. Kommunikationssystem nach Anspruch 13, wobei zumindest der Teil der gespeicherten Anrufhistorie auf dem cloudbasierten Kundenmanagementsystem (60) in Form einer vom Kunden abrufbaren Webseite gespeichert ist.

## Revendications

1. Procédé de gestion et/ou de signalisation d'au moins un appel VoIP à l'aide d'un système de communication (100; 100') qui comprend un sous-système multimédia IP, système IMS, (30) et un système de gestion client basé sur le nuage (60) enregistré sur le système IMS (30), dans lequel un dispositif compatible VoIP (70) est associé à un client (110), dans lequel une adresse est attribuée au dispositif compatible VoIP (70) et enregistrée conjointement avec un identifiant du client (110) sur le système de gestion client basé sur le nuage (60), et dans lequel le dispositif compatible VoIP (70) n'est pas directement connecté au système IMS (30), le procédé comprenant les étapes suivantes :
a) réception, au niveau du système IMS (30), d'un message de demande de session VolP provenant d'une partie appelante (20), dans lequel le message de demande de session VoIP comporte une information de description de session, une offre SDP et l'adresse du dispositif compatible VoIP (70) ;
b) transmission, par le système IMS (30), du message de demande de session VoIP au système de gestion client basé sur le nuage (60) ;
c) envoi, par le système de gestion client basé sur le nuage (60), en réponse au message de demande de session VoIP, d'un premier message de notification au dispositif compatible VoIP (70), le premier message de notification comportant une information d'un appel VoIP entrant ;
d) notification, en réponse au premier message de notification, du système de gestion client basé sur le nuage (60), que le dispositif compatible VoIP (70) est préparé à accepter l'appel VoIP entrant ;
e) transmission, par le système de gestion client basé sur le nuage (60), du message de demande de session VoIP au dispositif compatible VoIP (70) ;
f) envoi, par le dispositif compatible VoIP (70), d'un message comportant une réponse SDP en réponse à l'offre SDP au système de gestion client basé sur le nuage (60) ;
g) transmission de la réponse SDP, par le système de gestion client basé sur le nuage (60), au système IMS (30).

2. Procédé selon la revendication 1, dans lequel au moins deux dispositifs compatibles VoIP (70, 80) sont associés au client (110), une adresse différente étant attribuée à chacun des dispositifs compatibles VoIP (70, 80), dans lequel les différentes adresses sont enregistrées conjointement avec l'identifiant du client (110) sur le système de gestion client basé sur le nuage (60), le procédé comprenant les étapes suivantes :
a) réception, au niveau du système IMS (30), d'un message de demande de session VoIP provenant d'une partie appelante (20), d'un message de demande de session VoIP comportant une offre SDP (information de description de session) et de l'adresse de l'un des au moins deux dispositifs compatibles VoIP (70, 80) ;
b) transmission, par le système IMS (30), du message de demande de session VoIP au système de gestion client basé sur le nuage (60) ;
c) envoi, par le système de gestion client basé sur le nuage (60), en réponse au message de demande de session VolP, d'un premier message de notification à chacun des au moins deux dispositifs compatibles VoIP (70, 80) associés au client (110), le premier message de notification comportant une information concernant un appel VoIP entrant ;
d) notification du système de gestion client basé sur le nuage (60) du dispositif compatible VoIP (70) parmi les au moins deux dispositifs compatibles VoIP (70, 80), qui est préparé à accepter l'appel VoIP entrant ;
e) transmission, par le système de gestion client basé sur le nuage (60), du message de demande de session VolP uniquement audit dispositif compatible VoIP (70) notifié à l'étape d) au système de gestion client basé sur le nuage (60) ;
f) envoi, par ledit dispositif compatible VoIP (70) notifié à l'étape d), au système de gestion client basé sur le nuage (60), d'un message comportant une réponse SDP en réponse à l'offre SDP faite au système de gestion client basé sur le nuage (60) ;
g) transmission de la réponse SDP, par le système de gestion client basé sur le nuage (60), au système IMS (30).

3. Procédé selon la revendication 1 ou 2, dans lequel
l'étape g) comprend les étapes de transmission de la réponse SDP, du système IMS (30) à la partie appelante (20), et d'établissement d'une session VoIP entre la partie appelante (20) et ledit dispositif compatible VoIP (70) notifié à l'étape d) au système de gestion client basé sur le nuage (60).

4. Procédé selon l'une quelconque des revendications précédentes,
dans lequel l'étape d) comprend l'étape d'envoi, uniquement par ledit dispositif compatible VoIP (70), qui est préparé à accepter l'appel VoIP entrant, en réponse au premier message de notification, d'un message au système de gestion client basé sur le nuage (60), indiquant l'acceptation de l'appel VoIP entrant.

5. Procédé selon l'une quelconque des revendications précédentes, dans lequel
un dispositif non compatible VoIP (90) est associé au client (110), dans lequel l'étape c) comprend l'étape d'envoi, par le système de gestion client basé sur le nuage (60), d'un premier message de notification comportant une information concernant un appel VoIP entrant également au dispositif non compatible VoIP (90) associé au client (110), et dans lequel
l'étape d) comprend les étapes de sélection, par le client (110), uniquement du dispositif compatible VoIP(70) parmi les au moins deux dispositifs compatibles VoIP (70, 80), qui est préparé à accepter l'appel VoIP entrant, à l'aide du dispositif non compatible VolP (90) et d'envoi, par le dispositif non compatible VoIP (90), d'une information concernant le dispositif compatible VoIP (70) sélectionné au système de gestion client basé sur le nuage (90).

6. Procédé selon l'une quelconque des revendications précédentes,
dans lequel, en réponse au premier message de notification reçu à l'étape c), un signal optique et/ou acoustique indiquant un appel VoIP entrant est généré par chacun des dispositifs (70, 80, 90) associés au client (110).

7. Procédé selon la revendication 6 en relation avec la revendication 2,
dans lequel un second message de notification est envoyé, par le système de gestion client basé sur le nuage (60), à chacun des dispositifs compatibles VoIP (80) non notifiés à l'étape d) au système de gestion client basé sur le nuage, dans lequel chacun du second message de notification comporte une instruction pour arrêter de générer le signal optique et/ou acoustique.

8. Système de communication (100, 110'), comprenant
un sous-système multimédia IP, système IMS, (30) et
un système de gestion client basé sur le nuage (60) enregistré sur le système IMS (30) et configuré pour communiquer avec le système IMS (30), dans lequel au moins un dispositif compatible VoIP (70) est associé à un client (110), une adresse étant attribuée à l'au moins un dispositif compatible VoIP (70), dans lequel l'adresse est enregistrée conjointement avec un identifiant du client sur le système de gestion client basé sur le nuage (60), dans lequel le dispositif compatible VoIP (70) n'est pas directement connecté au système IMS (30), et dans lequel
le système de gestion client basé sur le nuage (60) est configuré pour
- recevoir, de la part du système IMS (30), un message de demande de session VoIP généré par une partie appelante (20), le message de demande de session VoIP comportant une information de description de session, une offre SDP et l'adresse de l'au moins un dispositif compatible VoIP (70),
- envoyer, en réponse au message de demande de session VoIP, un message de notification à l'au moins un dispositif compatible VoIP (70) associé au client (110), le message de notification comportant une information concernant un appel VoIP entrant,
- recevoir un message notifiant le système de gestion client basé sur le nuage (60) du dispositif compatible VoIP (70), qui est préparé à accepter l'appel VoIP entrant,
- transmettre le message de demande de session VoIP uniquement audit dispositif compatible VoIP (70) notifié au système de gestion client basé sur le nuage (60),
- recevoir un message comportant une réponse SDP dudit dispositif compatible VoIP (70) notifié au système de gestion client basé sur le nuage, et
- transmettre la réponse SDP au système IMS (30) pour transmettre la réponse SDP à une partie appelante (20).

9. Système de communication selon la revendication 8, dans lequel
au moins deux dispositifs compatibles VoIP (70, 80) sont associés au client (110), une adresse différente étant attribuée à chacun des au moins deux dispositifs compatibles VoIP (70, 80) associés au client (110), dans lequel les différentes adresses sont enregistrées conjointement avec l'identifiant du client (110) sur le système de gestion client basé sur le nuage (60), dans lequel
le système de gestion client basé sur le nuage (60) est configuré pour
- recevoir, à partir du système IMS (30), un message de demande de session VoIP généré par une partie appelante (20), le message de demande de session VoIP comportant une offre SDP (information de description de session) et une adresse d'un (70) des au moins deux dispositifs compatibles VoIP (70, 80),
- envoyer, en réponse au message de demande de session VoIP, un message de notification à chacun des au moins deux dispositifs compatibles VoIP (70, 80) associés au client (110), le message de notification comportant une information concernant un appel VoIP entrant,
- recevoir un message notifiant le système de gestion client basé sur le nuage (60) du dispositif compatible VolP (70) des au moins deux dispositifs compatibles VoIP (70, 80), qui est préparé à accepter l'appel VoIP entrant,
- transmettre le message de demande de session VoIP uniquement audit dispositif compatible VoIP (70) notifié au système de gestion client basé sur le nuage (60),
- recevoir un message comportant une réponse SDP dudit dispositif compatible VoIP (70) notifié au système de gestion client basé sur le nuage (60), et
- transmettre la réponse SDP au système IMS (30) pour transmettre la réponse SDP à une partie appelante (20).

10. Système de communication selon la revendication 8 ou 9, dans lequel
un dispositif non compatible VoIP (90) est associé au client (110), dans lequel le système de gestion client basé sur le nuage (60) est configuré pour envoyer un message de notification comportant une information concernant un appel VoIP entrant également au dispositif non compatible VoIP (90) associé au client (110), et dans lequel
le dispositif non compatible VoIP (90) est configuré pour générer, en réponse à une action d'un client, une information concernant le dispositif compatible VoIP (70), qui est préparé à accepter l'appel VoIP entrant et pour envoyer cette information au système de gestion client basé sur le nuage (60).

11. Système de communication selon l'une quelconque des revendications 8 à 10, dans lequel le système de gestion client basé sur le nuage (60) est configuré pour générer et stocker un historique d'appels par rapport au client.

12. Système de communication selon la revendication 11, dans lequel
l'historique d'appels comporte une information concernant chaque appel VoIP entrant et/ou sortant, une interruption ou un arrêt d'une session VoIP établie, une acceptation d'appel VoIP ou le refus d'une demande VolP.

13. Système de communication selon la revendication 11 ou 12, dans lequel
le système de gestion client basé sur le nuage (60) est configuré pour fournir au moins une partie de l'historique d'appels stocké, récupérable par le client.

14. Système de communication selon la revendication 13, dans lequel
au moins la partie de l'historique d'appels stocké est stockée sur le système de gestion client basé sur le nuage (60) sous la forme d'une page Web récupérable par le client.
